# EUROPEAN PATENT APPLICATION

(11) **EP 0 722 764 A2**
(43) Date of publication of application: **24.07.1996**
(21) Application number: 96300347.0
(22) Date of filing: 17.01.1996
(51) Int. Cl.: B01D 53/047

(54) **Recovery of hydrocarbons from gas streams**

(30) Priority: 23.01.1995 US 376276
(71) Applicant: THE BOC GROUP, INC., Murray Hill, New Jersey 07974 (US)
(72) Inventor: Shirley, Arthur, Piscataway, New Jersey 08854 (US)
(74) Representative: Wickham, Michael

(57) **Abstract**

A process for separating methane from a gas mixture containing methane and one or more of nitrogen, oxygen and argon by pressure swing adsorption in an bed of adsorbent which selectively adsorbs methane which includes the steps of flowing the gas mixture cocurrently into the bed of adsorbent at a production pressure in the range of about 15 to about 45 psig (2 - 4.1 bar), cocurrently purging the bed of adsorbent with methane-rich gas while simultaneously withdrawing nonadsorbed product gas from the nonadsorbed product end of the adsorber, and countercurrently depressurising said bed of adsorbent, thereby producing methane-rich gas.

## Description

This invention relates to the separation of the components of a gas mixture by adsorption and more particularly to the separation of low molecular weight hydrocarbons from air or its components by a pressure swing adsorption (PSA) process.

Gas mixtures containing low molecular weight hydrocarbons, such as methane, often exist in gas mixtures in coal and petroleum deposits and other underground formations, and are often produced in industrial processes. Because of their value, there is a strong economic incentive to recover the hydrocarbons from the gas mixtures.

A number of methods are available for separating the constituents of the above-described gas mixtures. A highly effective method for separating the constituents of gaseous mixtures is cryogenic distillation. This technique is very useful for large volume separation plants in which the feed gas being treated does not contain mixtures of oxygen and flammable gases. However, if a gaseous mixture of a hydrocarbon and an oxygen-containing gas, such as air, is cryogenically separated in a distillation column into substantially pure hydrocarbon and oxygen streams, a flammable mixture will be formed at some point within the column, thereby creating an explosion hazard. Accordingly, cryogenic separation cannot be safely used to separate mixtures of oxygen and hydrocarbons.

Cryogenic separation can, however, be used to separate gaseous hydrocarbons from the other constituents of a gaseous mixture which also contains oxygen, if the oxygen is first removed from the gas mixture. The oxygen can be removed from the mixture by, for example, catalytic combustion of the oxygen and a portion of the hydrocarbon gas. This method of separation likewise has major drawbacks. Firstly, the oxidation is highly exothermic, and provision must be made for waste heat removal. Secondly, some of the valuable hydrocarbon is used up in the combustion. It can readily be appreciated, therefore, that this method of hydrocarbon gas recovery can only be used when oxygen is present in the gas mixture in very small concentrations, such as, for example, concentrations of less than one volume percent.

Another procedure that has been considered for recovering gaseous hydrocarbons from oxygen-containing gas mixtures is adsorption. According to this procedure, the gas mixture is passed through an adsorbent which adsorbs the hydrocarbon in preference to the other components of the mixture. The gaseous hydrocarbon is generally recovered as the desorbed product stream and the other gases in the mixture are generally recovered as the nonadsorbed product stream. However, conventional adsorption procedures are not practical for the recovery of gaseous hydrocarbons from hydrocarbon-oxygen gas mixtures because when the process is optimised to produce high purity hydrocarbon, it is difficult to produce a nonadsorbed gas stream which contains the flammable gas at a concentration less than the lower flammable mixture limit.

Certain PSA processes have been used with success to recover hydrocarbon gases in high purities from air or other oxygen-containing gas mixtures without creating a flammable gas mixture. For example, US Patent No 4,305,734, issued to McGill, discloses a process for separating flammable gases such as methane from flammable gas-air mixtures by passing the gas mixture through a bed of adsorbent which adsorbs the flammable gas in preference to air. The adsorption step of McGill's process is followed by cocurrently flushing the adsorber with flammable gas, and then recovering flammable gas from the adsorber by depressurisation of the adsorber. US Patent No 5,229,089, issued to Ramachandran et al., discloses the recovery of flammable gases, such as methane, from other components of a gas stream by a process which includes the steps of pressurising an adsorption vessel with a feed gas, during which the flammable gas is adsorbed, and then cocurrently purging the adsorption bed with desorbed gas.

The desirable characteristic features of adsorption render this method of gas separation particularly suitable for the separation of flammable gases, such as hydrocarbons, from oxygen-containing gas mixtures. The present invention provides an improved pressure swing adsorption procedure for separating normally gaseous hydrocarbons from atmospheric gases.

According to the present invention, a process for separating one or more hydrocarbons containing 1 to 5 carbon atoms from a gas mixture comprising said one or more hydrocarbons and at least one of nitrogen, oxygen and argon by a pressure swing adsorption process in a bed of adsorbent which selectively adsorbs said one or more hydrocarbons comprising the steps:
(a) pressurising said bed of adsorbent to an adsorption pressure in the range of about 15 to about 45 psig (about 2.0 to about 4.1 bar) by cocurrently flowing said gas mixture into said bed;
(b) cocurrently purging said bed of adsorbent with hydrocarbon-enriched product at said adsorption pressure, thereby producing hydrocarbon-depleted gas; and
(c) countercurrently depressurising said bed of adsorbent, thereby regenerating said adsorbent and producing hydrocarbon-enriched product.

In one preferred embodiment of the invention, the PSA cycle comprises the steps of (i) partially pressurising the bed of adsorbent by countercurrently passing into the bed cocurrent depressurisation gas, produced in step (iv), below; (ii) pressurising the bed to an adsorption pressure in the range of about 15 to about 45 psig by cocurrently introducing the gas mixture into the bed; (iii) cocurrently introducing hydrocarbon-enriched product gas into the bed while simultaneously cocurrently withdrawing hydrocarbon-depleted gas from the bed; (iv) partially depressurising the bed by cocurrently withdrawing gas therefrom; and (v) further depressurising the bed by countercurrently withdrawing adsorbed hydrocarbon gas therefrom, thereby regenerating the bed of adsorbent and producing hydrocarbon-enriched product.

In another preferred embodiment of the invention, the PSA cycle comprises the steps of (i) partially pressurising the bed of adsorbent by countercurrently passing into the bed hydrocarbon-depleted gas, produced, for example, in step (iii), below; (ii) pressurising the bed to an adsorption pressure in the range of about 15 to about 45 psig by cocurrently introducing feed gas into the bed; (iii) cocurrently introducing hydrocarbon-enriched product gas into the bed while simultaneously cocurrently withdrawing nonadsorbed hydrocarbon-depleted gas from the bed; and (iv) depressurising the bed by countercurrently withdrawing adsorbed hydrocarbon gas therefrom, thereby regenerating the bed of adsorbent and producing hydrocarbon-enriched product.

In the most preferred embodiment of the invention, the PSA cycle comprises the steps of (i) partially pressurising the bed of adsorbent by countercurrently flowing cocurrent depressurisation gas produced in step (v), below, into the bed; (ii) further pressurising the bed of adsorbent by countercurrently passing hydrocarbon-depleted gas produced, for example, in step (iv), below, into the bed; (iii) pressurising the bed to a production pressure in the range of about 15 to about 45 psig by cocurrently passing gas mixture thereinto; (iv) cocurrently introducing hydrocarbon-enriched product gas into the bed while simultaneously cocurrently withdrawing hydrocarbon-depleted gas from the bed; (v) partially depressurising the bed by cocurrently withdrawing gas therefrom; and (vi) further depressurising the bed by countercurrently withdrawing adsorbed hydrocarbon gas therefrom, thereby regenerating the bed of adsorbent and producing hydrocarbon-enriched product.

The bed regeneration step, during which the bed is depressurised by countercurrently withdrawing adsorbed hydrocarbon gas from the bed, may be carried out by venting the bed to atmospheric pressure or above, or by using a vacuum pump to evacuate the bed of adsorbent to a very low pressure, or by a combination of vent depressurisation and vacuum evacuation. The adsorbent is generally regenerated by depressurising it to an absolute pressure in the range of about 100 to about 2000 millibar, and preferably to an absolute pressure in the range of about 150 to about 1000 millibar.

In preferred embodiments, the adsorption pressure is in the range of about 20 to about 40 psig (about 2.4 to about 3.8 bar).

In a variation of the above embodiments, the adsorption process may include a feed/production step between the step of pressurising the bed of adsorbent to the desired production pressure with feed gas and the step of cocurrently passing hydrocarbon-enriched product gas into the bed while simultaneously cocurrently withdrawing hydrocarbon-depleted gas from the bed. During the feed/production step, gas mixture is passed cocurrently into the bed of adsorbent while nonadsorbed hydrocarbon-depleted gas is simultaneously cocurrently withdrawn from the bed.

When the process is used to recover a hydrocarbon from an oxygen-containing gas mixture, residual oxygen can be subsequently removed from the recovered hydrocarbon-enriched product stream, if desired, by contacting the product stream with an oxidation catalyst under combustion conditions, thereby effecting reaction between the oxygen and hydrocarbon to produce water and other by-products, such as carbon dioxide or sulphur dioxide. Alternatively, the product stream can be contacted with hydrogen and an oxidation catalyst to produce water. The water and other by-products can be removed from the product stream by adsorption using a suitable adsorbent, such as alumina, silica gel or zeolite 3A.

In a preferred embodiment the invention is applied to the recovery of methane, ethane, propane or mixtures of two or all of these from a gas stream. In a most preferred embodiment the invention is applied to the recovery of methane from gas streams.

In another preferred embodiment, the process of the invention is used to separate gaseous hydrocarbons from nitrogen gas mixtures, oxygen gas mixtures or air. In a particularly preferred embodiment, the process is applied to the recovery of methane from a methane-air mixture.
The invention will now be described by way of example with reference to the accompanying drawings, in which:

Figure 1 is a diagrammatic view of one embodiment of a PSA apparatus suitable for recovering a hydrocarbon gas from a gas mixture by a process according to the invention; and

Figures 2A to 2F illustrate the steps of another process according to the invention carried out in a two adsorber apparatus with the adsorbers operated out of phase.

Only equipment, valves and lines necessary for an understanding of the invention have been included in the drawings.

The benefit of the invention results from the use of a unique PSA cycle and by carrying out the adsorption step of the cycle at a pressure within a specific range. These factors make it possible to produce hydrocarbon-enriched product, or even high purity hydrocarbon product. As used herein the term "hydrocarbon-enriched product' means a gas product containing a higher concentration of hydrocarbon than the gas mixture entering the system as feed, and the term "high purity hydrocarbon" refers to a gas product containing 96% or more by volume hydrocarbon.. A PSA cycle according to the invention includes a purge step during which high purity hydrocarbon is used to purge the nonadsorbed gas component(s) from the bed of adsorbent. The high pressure purge is passed cocurrently into the bed of adsorbent at the adsorption pressure, i.e. at a pressure in the range of about 15 to about 45 and preferably at a pressure in the range of about 20 to about 40 psig.

The process of the invention may be carried out in a single adsorption unit or battery of adsorption units operated in phase, or in a plurality of adsorption units or batteries of adsorption units operated out of phase, whichever is desired. When a system comprising a single adsorption unit or an "in phase" battery of units is used, the adsorption step must be periodically stopped to permit regeneration of the adsorbent bed(s), whereas when a plurality of adsorption units are employed in parallel and operated out of phase, one or more units can be in service producing purified gas while one or more other units are undergoing regeneration.

The adsorption units contain one or more adsorbents which selectively adsorb hydrocarbons from the gas stream. Suitable adsorbents include zeolite molecular sieves, carbon molecular sieves, activated carbon, and the like. In some cases it may be desirable to provide a guard bed containing silica or alumina upstream of the main adsorption units for the removal of water vapour from the feed gas.

The process of the invention can be advantageously used to separate C₁ to C₅ hydrocarbons from nitrogen, oxygen, argon or mixtures of these gases. Hydrocarbons that can be separated by the process of the invention include methane, ethane, ethylene, propane, propylene, the butanes, the butenes, the pentanes, the pentenes, etc. The invention is particularly useful for separating methane, ethane or propane or a mixture comprising predominantly two or all three of these gases, e.g. natural gas, from an oxygen-containing gaseous mixture in which the methane and/or ethane and/or propane is present at a concentration greater than the upper flammable limit for the gas mixture, since the process permits the separation to be effected without the formation of a flammable or explosive mixture.

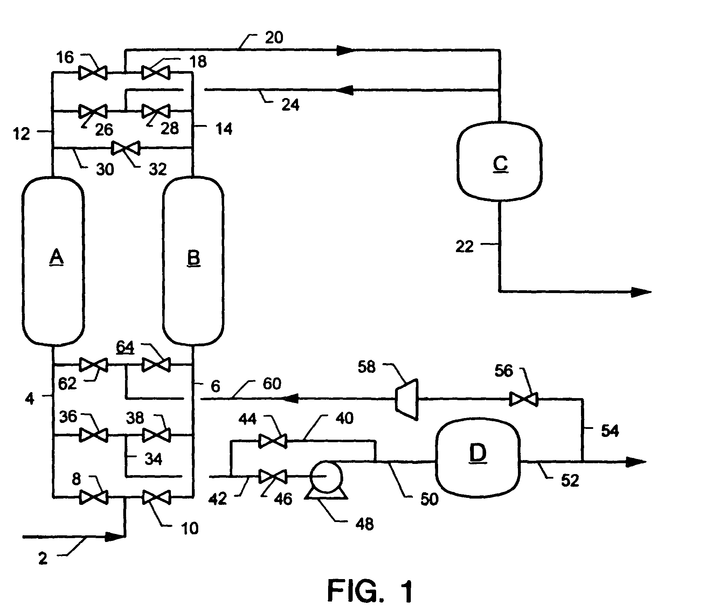

The process of the invention will be further described in detail as practised in a two parallel bed adsorption apparatus, although, as indicated above, it is understood that such an apparatus is only exemplary of apparatuses suitable for practising the process of the invention. A typical suitable apparatus is illustrated in Figure 1. Referring now to Figure 1, there is shown therein an adsorption system comprising parallel adsorption units A and B, each of which contains an adsorbent which selectively adsorbs hydrocarbons from the gas mixtures being treated in the system. Feed gas is provided to adsorbers A and B through feed line 2. Line 2 joins a feed gas source (not shown) to adsorption unit feed lines 4 and o, which, in turn are connected to the feed inlet of adsorption units A and B, respectively. Lines 4 and 6 are respectively fitted with valves 8 and 10, so that feed gas can be alternately directed into adsorption units A and B. On their nonadsorbed product outlet ends, adsorption units A and B are joined to nonadsorbed product discharge lines 12 and 14, respectively. Lines 12 and 14 are fitted with valves 16 and 18, respectively, which provide for the selective removal of nonadsorbed product gas from either one of adsorption units A and B. Lines 12 and 14 connect to line 20 at a point between valves 16 and 18. Line 20, in turn, is connected to nonadsorbed product reservoir C. Nonadsorbed product gas can be discharged from reservoir C to product storage or to the atmosphere, as desired, through line 22.

Nonadsorbed product backfill gas can be provided to adsorbers A and B via line 24, which can be placed in fluid communication with lines 12 and 14 through valves 26 and 28, respectively.

The nonadsorbed product end of adsorbers A and B can be placed in fluid communication through adsorber pressure equalisation line 30. Flow of gas through line 30 can be effected by opening valve 32.

The illustrated system is provided with adsorption unit evacuation line 34 so that desorbed hydrocarbon-rich product gas can be removed from adsorption units A and B. Line 34 communicates with lines 4 and 6, respectively, through valves 36 and 38. Line 34 is also connected to vacuum pump bypass line 40 and vacuum pump feed line 42. Flow through lines 40 and 42 is controlled by valves 44 and 46, respectively. Vacuum pump feed line 42 joins line 34 to the inlet end of vacuum pump 48. Desorbed hydrocarbon discharge line 50 joins the discharge end of vacuum pump 48 to hydrocarbon product gas reservoir D. Line 40 joins lines 34 and 50, thereby bypassing vacuum pump 48. Line 52 removes desorbed hydrocarbon product gas from reservoir D for transfer to hydrocarbon gas storage. Desorbed hydrocarbon gas can also be returned to adsorbers A and B for purging purposes through line 54. Flow through line 54 is controlled by valve 56. Line 54 connects line 52 to the inlet of hydrocarbon purge compressor 58. Purge gas line 60, connected to the discharge end of compressor 58, can be put into fluid communication with adsorption unit feed lines 4 and 6, respectively, through valves 62 and 64.

The process of the invention will be described as it applies to the recovery of methane in the apparatus illustrated in Figure 1 from a methane-air mixture which contains methane at a concentration above the upper flammable mixture limit, which, at atmospheric pressure and 25° C, is about 14% methane by volume. The terms "cocurrent" and "cocurrently", as used herein with respect to gases flowing through the adsorption bed, means flow towards the nonadsorbed product gas outlet end of an adsorption vessel from the feed gas inlet end, and the terms "countercurrent" and "countercurrently" mean flow in the opposite direction, i.e. toward the feed gas inlet end of an adsorption vessel from the nonadsorbed product gas outlet end.

The cycle for one preferred example of the process of the invention is shown in Table I.

**TABLE I**

| Step | Adsorber A | Adsorber B |
|---|---|---|
| 1 | Equalisation | Equalisation |
| 2 | Product Backfill | Vent Depressurisation |
| 3 | Feed Pressurisation | Vacuum Depressurisation |
| 4 | Copurge/Production | Vacuum Depressurisation |
| 5 | Equalisation | Equalisation |
| 6 | Vent Depressurisation | Product Backfill |
| 7 | Vacuum Depressurisation | Feed Pressurisation |
| 8 | Vacuum Depressurisation | Copurge/Production |

In the cycle set forth in Table I, the conditions under which steps 1, 2, 3 and 4 are carried out are preferably identical to the conditions under which steps 5, 6, 7, and 8, respectively, are carried out. At the beginning of step 1, adsorber A in Figure 1 has just completed the regeneration phase and adsorber B has just completed the production phase of the cycle. During step 1, valve 32 is open and all other valves of the system are closed. Cocurrent Depressurisation gas flows cocurrently out of adsorber B, through line 30 and countercurrently into adsorber A, thereby partially pressurising adsorber A. The purpose of this step is to conserve some of the pressure energy that is stored in the adsorber that has just completed production and to remove some of the relatively air-rich void space gas contained in adsorber B prior to the methane recovery step. Although this step is designated as an equalisation step, it is not necessary that the step be continued until complete equalisation between adsorbers A and B is effected.

Upon completion of step 1, valve 32 is closed and valves 26, 38 and 44 are opened. Step 2, the product backfill step, begins and adsorber A now undergoes further partial pressurisation by the countercurrent flow of product gas (air) from reservoir C through line 24, valve 26 and line 12 and into adsorber A. Simultaneously, methane-rich gas is countercurrently desorbed from the adsorbent in unit B by allowing the gas to vent through line 6, valve 38, line 34, valve 44 and line 40 and into reservoir D. The gas being vented from adsorber B generally contains 80% or more by volume methane. Some of this gas is transferred through line 52 to methane product storage and the remainder of it will be recycled through line 54 to the adsorbers as purge gas.

Upon completion of step 2, valve 38 remains open, valves 26 and 44 are closed (in this embodiment), valves 8 and 46 are opened and vacuum pump 54 is actuated, and step 3 begins. All other valves remain closed during step 3. During this step, pressurisation of adsorber A continues with the flow of fresh feed gas cocurrently into adsorber A through line 2, valve 8 and line 4 until the pressure in adsorber A reaches the desired operating pressure. Meanwhile, countercurrent evacuation of unit B begins with the vacuum withdrawal of gas through line 6, valve 38, lines 34 and 42 and valve 46. Hydrocarbon-rich gas is drawn through vacuum pump 48 and is discharged into reservoir D.

Upon complete pressurisation of adsorber A, step 3 ends and step 4 begins. During step 4, valves 38 and 46 remains open, valves 16, 56 and 62 are opened, and valve 8 is closed. All other valves remain closed. Hydrocarbon product purge gas is now drawn through lines 52 and 54, and valve 56 to purge gas compressor 58. As the gas passes through compressor 58, its pressure is raised to the adsorption pressure in adsorber A. It then passes through line 60 and valve 62 and enters adsorption unit A. The purge gas flowing cocurrently through adsorber A purges nonadsorbed gas from the inlet end of this unit, and the adsorption front in adsorber A moves toward the nonadsorbed product outlet. As the methane front advances in adsorber A, nonadsorbed gas is forced from adsorber A through line 12. The gas initially exiting adsorber A is comprised substantially of air. This gas flows through valve 16 and line 20 and enters nonadsorbed product reservoir C. When the front reaches the desired point in adsorber A, the flow of purge gas into adsorber A is terminated. The termination point is optimally near the nonadsorbed product gas outlet of the adsorber, so that the adsorption system can be operated with maximum efficiency. Substantial breakthrough of methane from adsorber A is avoided to prevent the gas exiting this unit through the nonadsorbed gas outlet from containing sufficient methane to constitute a flammable mixture. While adsorber A is undergoing purging and production, countercurrent vacuum depressurisation of adsorber B continues. When this step is finished, the first half of the cycle of the process of the invention is completed.

The second half of the cycle is carried out by reversing the functions conducted in adsorbers A and B during steps 14 by manipulation of valves corresponding to the valves operated during the respective preceding steps. Thus, during step 5, only valve 32 is open and equalisation gas flows from adsorber A to adsorber B; during step 6, only valves 28, 36 and 44 are open, and backfill gas flows into adsorber B while adsorber A undergoes countercurrent vent depressurisation; during step 7, only valves 10, 36 and 46 are open and vacuum pump 48 is actuated, and adsorber B is pressurised to operating pressure with fresh feed gas while adsorber A undergoes vacuum desorption; and during step 8, only valves 18, 36, 46, 56 and 64 are open and vacuum pump 48 remains actuated, and adsorber B undergoes cocurrent hydrocarbon product purge and nonadsorbed product production step while adsorber A completes vacuum depressurisation.

In Table I, steps 7 and 8 in Adsorber A and steps 3 and 4 in Adsorber B are described as vacuum depressurisation steps. If it is desired to vent the beds to atmospheric pressure or above, these steps would, of course be replaced by vent depressurisation steps (described for step 6 in adsorber A and step 2 in adsorber B).

The above cycle is a preferred operating cycle since it makes possible the production of a relatively high purity, e.g. as high as 96% by volume pure or higher, methane-enriched product stream as the desorbed gas product, while at the same time producing a waste air stream which contains as little as 3% by volume or less methane. The methane-rich gas stream can be safely stored or transported because it contains insufficient oxygen to render it flammable. The waste air stream can be released to the atmosphere, since it contains environmentally acceptable amounts of methane; it can be catalytically oxidised to convert the methane in the stream to carbon dioxide and water vapour; or it can be used for other purposes, for example as a dryer purge gas in the methane-enriched gas post purification operation described below.

As a variation of the above-described process, the cycle can be modified by eliminating the product backfill portion of steps 2 and 6. In this variation the pressurisation formerly provided by the product backfill can be provided by extending the feed pressurisation step. This embodiment is not as efficient as the preferred cycle since it results in the production of a less pure nonadsorbed gas stream, but where the purity of this stream is not critical, this embodiment can be used to advantage when it is desirable to operate with a greater feed throughput.

In another modification of the preferred cycle, the feed pressurisation steps (steps 3 and 7) can each be followed by feed/production steps (steps 3A and 7A, respectively), during which the flow of feed gas into the adsorber is continued after the adsorber undergoing pressurisation reaches the desired operating pressure, while nonadsorbed product is produced. Steps 3A and 7A are preferably of equal duration. During step 3A, valves 8, 16, 38 and 44 are open and adsorber A is in the feed/production mode and adsorber B is undergoing countercurrent vent depressurisation; and during step 7A, valves 10, 18, 36 and 44 are open and adsorber B is in the feed/production mode and adsorber A is undergoing countercurrent vent depressurisation. The effect of these modifications is to increase the feed gas throughput in the system, but lower the purity of the desorbed product.

The invention is further illustrated by the following examples, in which parts, percentages and ratios are on a volume basis, unless otherwise indicated.

### EXAMPLE

This example consisted of three runs which were identical in all respects except that the adsorption pressure was varied. The feed gas used in the runs was a mixture of 52 % methane and 48% nitrogen. The runs were carried out in a pair of adsorbers arranged in a system similar to that illustrated in Figure 1. The adsorbers were 22 inches high and had an internal diameter of 1 1/16 inches and each had a volume of 0.79 litres (1). The adsorbers were packed with 12 X 40 mesh activated carbon, sold by ATOCHEM N. A. under the trade designation GAC 40.

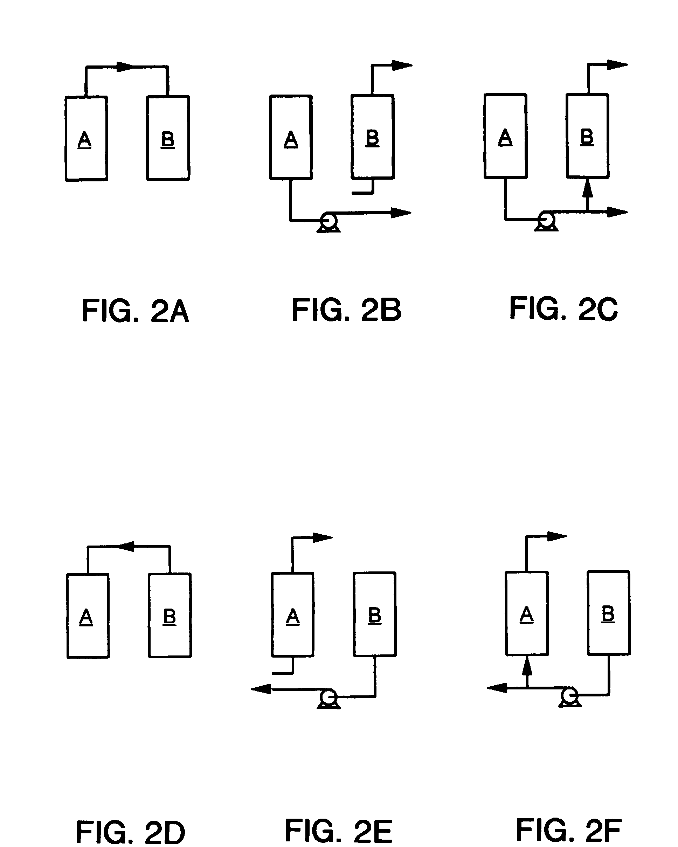

The six step adsorption cycle used in this experiment is illustrated in Figures 2A to 2F. Each half-cycle of the adsorption process consisted of three steps, an equalisation step, which lasted for 5 secs.; a feed/production-bed evacuation step, which lasted for 10 secs.; and a cocurrent methane-rich gas purge-bed evacuation step, which lasted for 15 secs. During the equalisation steps, the outlet ends of the beds were connected (Figures 2A and 2D). During the feed/production-bed evacuation steps, fresh feed was passed into one adsorber at the specified adsorption pressure while methane-depleted gas was withdrawn from the nonadsorbed gas outlet of the adsorber, and the other adsorber was evacuated (Figures 2B and 2E). During the bed regeneration/cocurrent methane-rich gas purge-bed evacuation step, one adsorber was cocurrently purged with methane-rich gas while nonadsorbed gas was purged from the adsorber, and the other adsorber was further desorbed to a final pressure slightly above atmospheric pressure (Figures 2C and 2F). The adsorptions were conducted at room temperature. The adsorption pressures and results obtained for the various runs is tabulated in Table II.

**TABLE II**

| Run | Pressure, psig | % Methane in LPP¹ |
|---|---|---|
| 1 | 15 | 80.0 |
| 2 | 30 | 90.0 |
| 3 | 50 | 75.5 |

| | | |
|---|---|---|
| ¹ Desorbed methane-rich product | | |

The foregoing example illustrates the purity of the desorbed methane product is higher at 30 psig than it is at 15 psig and 50 psig. This is unexpected since product purity generally increases with increasing adsorption pressure; thus it would be expected that the purity of the methane product would be higher when the adsorption pressure is 50 psig than it is when the adsorption pressure is 30 psig.

Although the invention has been described with reference to specific examples, it is understood that variations of these are contemplated. For example, the invention can be used to treat hydrocarbon streams from other sources, such as oil wells and chemical process units, and the adsorption cycle used in the process of the invention can have steps other than the steps discussed above.

## Claims

1. A process for separating one or more hydrocarbons containing 1 to 5 carbon atoms from a gas mixture comprising said one or more hydrocarbons and at least one of nitrogen, oxygen and argon by a pressure swing adsorption process in a bed of adsorbent which selectively adsorbs said one or more hydrocarbons comprising the steps:
(a) pressurising said bed of adsorbent to an adsorption pressure in the range of about 15 to about 45 psig (about 2.0 to about 4. 1 bar) by cocurrently flowing said gas mixture into said bed;
(b) cocurrently purging said bed of adsorbent with hydrocarbon-enriched product at said adsorption pressure, thereby producing hydrocarbon-depleted gas; and
(c) countercurrently depressurising said bed of adsorbent, thereby regenerating said adsorbent and producing hydrocarbon-enriched product.

2. The process as claimed in claim 1, further comprising between steps (b) and (c) the additional step of partially depressurising said bed of adsorbent by cocurrently releasing gas therefrom, and prior to step (a) the preliminary step of partially pressurising said bed of adsorbent by countercurrently flowing into said bed gas released is said additional step.

3. A process as claimed in claim 1, further comprising prior to step (a) the additional step of at least partially pressurising said bed of adsorbent by countercurrently flowing into said bed said hydrocarbon-depleted gas.

4. A process claimed in claim 2, further comprising between said preliminary step and step (a) the further step of further pressurising said bed of adsorbent by countercurrently flowing into said bed said hydrocarbon-depleted gas.

5. A process as claimed in any one of the preceding claims, further comprising between steps (a) and (b) the additional step of cocurrently flowing said gas mixture into said bed while cocurrently withdrawing hydrocarbon-depleted gas therefrom.

6. A process as claimed in any one of claims 1 to 5, wherein said gas mixture comprises air and at least one hydrocarbon selected from methane, ethane and propane.

7. A process as claimed in any one of claims 1 to 5, wherein said gas mixture comprises methane and nitrogen.

8. A process as claimed in any one of claims 1 to 5, wherein said gas mixture comprises methane and oxygen.

9. A process as claimed in any one of claims 1 to 5, wherein said gas mixture contains oxygen and said hydrocarbon-enriched product is further purified by catalytically reacting oxygen contained therein with said one or more hydrocarbons.

10. A process as claimed in claim 9, wherein moisture produced in the catalytic reaction is removed by passing the hydrocarbon product through a bed of adsorbent selected from alumina, silica gel, zeolite 3A or combinations of these.
